# EUROPÄISCHE PATENTSCHRIFT

(11) **EP 2 246 150 B1**
(45) Veröffentlichungstag und Bekanntmachung des Hinweises auf die Patenterteilung: **08.01.2014**
(21) Anmeldenummer: 10004485.8
(22) Anmeldetag: 28.04.2010
(51) Int. Cl.: B23Q 39/02

(54) **4-Achsen-Werkzeugmaschine mit Sägeeinrichtung**
4 axes machine tool with sawing device
Machine-outil à 4 axes avec unité de sciage

(30) Priorität: 28.04.2009 DE 102009019267
(43) Veröffentlichungstag der Anmeldung: 03.11.2010
(73) Patentinhaber: Mubea Systems, Société Anonyme, 7700 Mouscron (BE)
(72) Erfinder: Havegeer, Francky Gaston, 8800 Roeselare (BE)
(74) Vertreter: Behrendt, Arne

(56) Entgegenhaltungen:
- EP-A1- 0 740 978
- EP-A1- 1 555 084
- EP-A2- 0 993 903
- DE-A1- 4 113 629
- DE-A1- 4 332 630
- DE-A1- 10 331 338
- DE-A1- 19 523 198
- DE-A1-102006 029 146
- DE-C1- 4 444 339
- DE-U1-202006 001 351
- US-A1- 2006 182 506

## Beschreibung

Die vorliegende Erfindung betrifft eine 4-Achsen-Werkzeugmaschine nach dem Oberbegriff des Anspruchs 1.

Entsprechende 4-Achsen-Werkzeugmaschinen sind aus dem Stand der Technik bekannt (siehe z.B. DE-202006001351U) und ermöglichen mit einer geeigneten Steuerung derselben eine vollautomatisierte Bearbeitung von Profilstangen unter Berücksichtigung von vorgegebenen Parametern. Die mit solchen 4-Achsen-Werkzeugmaschinen bearbeiteten Profilstangen finden im Bauwesen unterschiedlichste Anwendung, wie beispielsweise als Fenster- oder Türrahmenelemente. Die Bearbeitung der Profilstangen umfasst insbesondere die Arbeitsschritte Fräsen, Bohren, Gewindebohren, Einkerben und ähnliches.

Aufgabe der vorliegenden Erfindung ist es, eine gegenüber dem Stand der Technik verbesserte 4-Achsen-Werkzeugmaschine zur Bearbeitung von Profilstangen bereitzustellen, welche eine flexiblere und bessere Bearbeitung von Profilstangen ermöglicht, wie sie ähnlich nur mit bekannten hochpreisigen 5-Achsen-Werkzeugmaschinen möglich ist, die jedoch deutlich niedrigere Herstellungskosten als diese aufweist.

Diese Aufgabe wird gemäß der Erfindung durch eine 4-Achsen-Werkzeugmaschine nach Anspruch 1 gelöst.

Die erfindungsgemäße 4-Achsen-Werkzeugmaschine unterscheidet sich von den herkömmlichen 4-Achsen-Werkzeugmaschine zum einen dadurch, dass zusätzlich zu der gegebenen Bearbeitungsvorrichtung eine von dieser separate Sägeeinrichtung zum Ablängen der Profilstangen vorhanden ist. Zur Bearbeitung und Ablängung sind somit nicht, wie bislang üblich, eine 4-Achsen-Werkzeugmaschine und eine Ablängmaschine erforderlich, sondern beide Arbeitsschritte (Bearbeiten und Ablängen) können auf ein und derselben Werkzeugmaschine ausgeführt werden. Hierdurch ist eine sehr genaue Abstimmung zwischen der Positionierung der jeweiligen Sägeschnitte und der Positionierung anderer an derselben Profilstange vorzunehmender Bearbeitungen möglich. Zudem ist es nicht mehr erforderlich, dass abgelängte Profilstangen von der Ablängmaschine zur weiteren Bearbeitung mittels der 4-Achsen-Werkzeugmaschine zu dieser transportiert werden müssen. Ferner können durch die separate Sägeeinrichtung mehrere abzulängende Profile gleichzeitig abgelängt werden, was die Herstellungszeit der einzelnen Profile verkürzt.

Da auch die Enden der abgelängten Profilstangen, insbesondere der stirnseitige Bereich der Enden, auf bestimmte Art und Weise bearbeitet werden sollen, ist gemäß einer vorteilhaften Ausgestaltung der Erfindung ein Verschiebemechanismus vorgesehen, mit dem eine einzelne oder mehrere Halteeinheiten entlang der Längserstreckung der Führungseinheit (X-Achse) verschoben werden können. Durch die Verschiebung von einen abgelängten Abschnitt der Profilstange haltenden Halteeinheiten wird dieser Abschnitt mitverschoben, vorzugsweise in axialer Richtung der Profilstange weg von dem verbleibenden Abschnitt der Profilstange, wodurch die durch einen Sägeschnitt entstehenden Enden der Abschnitte der Profilstange zur weiteren Bearbeitung der Enden zugänglich werden.

Eine solche Bearbeitung von Profilstangen ist bislang lediglich mit einer 5-Achsen-Werkzeugmaschine möglich. Hierzu weist eine solche 5-Achsen-Werkzeugmaschine eine weitere Schwenkachse auf, welche parallel zur Z-Achse ausgerichtet ist und üblicherweise als C-Achse bezeichnet wird. Diese ist erforderlich, um mit der Bearbeitungseinheit einer solchen 5-Achsen-Werkzeugmaschine auch Sägevorgänge durchführen zu können, wozu ein Verschwenken der Bearbeitungseinheit um die C-Achse erfolgen muss. Eine solche Ausgestaltung einer Werkzeugmaschine zur Bearbeitung von Profilstangen ist jedoch mit deutlich höheren Kosten verbunden, als es im Fall der vorliegenden Erfindung betreffend eine 4-Achsen-Werkzeugmaschine mit von der Bearbeitungseinheit getrennt angeordneter Sägeeinrichtung gegeben ist. Des Weiteren ist bei den bekannten 5-Achsen-Werkzeugmaschinen nachteilig, dass ein sehr kostspieliger Antrieb für die Arbeitsspindel der Bearbeitungseinheit eingesetzt werden muss, welcher den unterschiedlichen auftretenden Beanspruchungen bei der Bearbeitung sowie dem Sägen gewachsen sein muss. Wegen der Bewegungsgeometrie von Arbeitsspindeln der 5-Achsen-Werkzeugmaschinen ist die Sägetiefe für die Ablängsägeschnitte begrenzt. Die Verwendung einer separaten Sägeeinrichtung macht es möglich, die Sägetiefe zu vergrößern, um auch Profile abzulängen, deren Dimensionen senkrecht zur Längserstreckung größer sind. Zudem ist der Durchmesser eines Sägeblattes durch die jeweilige Ausgestaltung einer damit auszustattenden 5-Achsen-Werkzeugmaschine sehr begrenzt, was bei der erfindungsgemäßen Anordnung einer separaten Sägeeinrichtung nicht gegeben ist. Auch hier ist es deutlich kostengünstiger, die erfindungsgemäße 4-Achsen-Werkzeugmaschine einzusetzen, bei der ein relativ kostengünstiger Antrieb an der Bearbeitungseinheit zur Ausführung der entsprechenden Bearbeitungsschritte angeordnet werden kann, während ein auf die beim Sägen der Profilstangen auftretenden Beanspruchungen zugeschnittener und kostengünstiger Antrieb an der Sägeeinrichtung angeordnet ist. Beide Antriebe zusammen sind deutlich preisgünstiger als der Antrieb der Arbeitsspindel einer herkömmlichen 5-Achsen-Werkzeugmaschine. Insbesondere müssen Bearbeitungsköpfe von 5-Achsen-Werkzeugmaschinen mit Hochleistungsarbeitsspindeln betrieben werden, um bei niedrigen Drehzahlen ein zum Sägen ausreichendes Drehmoment bereit stellen zu können. Durch die Trennung von Bearbeitungseinrichtung und Sägeeinrichtung kann die Sägeeinrichtung derart optimiert werden, dass bei niedrigerer Leistung mit großen Sägeblättern gesägt werden kann, was mit einer deutlichen Kostenreduzierung verbunden ist.

Nach einer vorteilhaften Ausgestaltung der Erfindung ist die Sägeeinrichtung an der Bearbeitungseinrichtung angeordnet und gemeinsam mit dieser entlang der Längserstreckung der Führungseinheit (X-Achse) bewegbar. Diese Ausgestaltung ist von Vorteil, da lediglich ein Antrieb sowohl für die Bewegung der Bearbeitungseinrichtung, als auch der der Sägeeinrichtung vorzusehen ist, was insgesamt die Kosten für eine entsprechende 4-Achsen-Werkzeugmaschine weiter senkt.

Alternativ kann aber auch vorgesehen sein, dass die Sägeeinrichtung baulich von der Bearbeitungseinrichtung getrennt an der Führungseinheit angeordnet ist und unabhängig von der Bearbeitungsseinrichtung mittel eines eigenen Antriebs entlang der Längserstreckung der Führungseinheit (X-Achse) bewegbar ist. Diese Ausgestaltung ermöglicht eine Erhöhung der Produktionsgeschwindigkeit, indem die Bearbeitungsschritte und der Sägeschritt gleichzeitig durchgeführt werden.

Eine weitere vorteilhafte Ausgestaltung der Erfindung sieht vor, dass die Sägeeinrichtung ein quer zur Längserstreckung der Führungseinheit (X-Achse) angeordnetes Sägeblatt aufweist, dass um eine senkrecht zur Längserstreckung der Führungseinheit (X-Achse) und horizontal ausgerichtete Rotationsachse (B-Achse) verschwenkbar an der Sägeeinrichtung angeordnet ist, wobei das Sägeblatt beim Sägen senkrecht (Y-Achse) zur Längserstreckung der Führungseinheit (X-Achse) und horizontal bewegbar an der Sägeeinrichtung angeordnet ist. Durch die Verschwenkung des Sägeblatts um die Rotationsachse (B-Achse) kann das Ablängen der Profilstangen nicht nur in einer senkrecht zur Längserstreckung der Profilstange angeordneten Ebene erfolgen, sondern auch quer zu dieser unter unterschiedlichen Winkeln, beispielsweise zwischen -45° und +45°. Die Bewegung des Sägeblatts senkrecht (Y-Achse) zur Längserstreckung der Führungseinheit (X-Achse) und horizontal ermöglicht, dass das Sägeblatt von einer Seite an die Profilstange herangeführt und zum Sägen durch diese von dort aus zur gegenüberliegenden Seite hindurchgeführt wird. Es gibt verschiedene Möglichkeiten, dien Winkel des Sägeblattes relativ zum Profil beziehungsweise zur Führungseinheit zu ändern, wie beispielsweise durch einen Servoantrieb, einen pneumatischen oder hydraulischen Antrieb. Jedoch ist es auch möglich, einen bestimmten fixierten Winkel einzustellen und beizubehalten.

Gemäß einer weiteren vorteilhaften Ausgestaltung der Erfindung weist der Verschiebemechanismus eine parallel zur Längserstreckung der Führungseinheit (X-Achse) angeordnete Zug-/Schubstange auf, an die die Halteeinheiten ankoppelbar sind. Die Halteeinheiten können vereinzelt oder in beliebigen Gruppierungen beispielsweise mittels einer steuerbaren Klemme an die Zug-/Schubstange ankoppeln oder von dieser abkoppeln. Ein Bewegen der Zug-/Schubstange in Richtung ihrer Längserstreckung bewerkstelligt ein Mitbewegen der an die Zug-/Schubstange angekoppelten Halteeinheiten, insbesondere um zu bearbeitende Enden von abgelängten Profilstangenabschnitten zur weiteren Bearbeitung zugänglich zu machen. Die Zug-/Schubstange kann beispielsweise pneumatisch, elektromotorisch, hydraulisch, mit der Bearbeitungseinrichtung oder auf andere geeignete Art und Weise angetrieben sein.

In einer weiteren vorteilhaften Ausführungsform der Erfindung weist wenigstens eine Halteeinheit einen Antrieb auf. Dieses kann vorgesehen sein, wenn die Zug-/Schubstange ortsfest gehalten wird und die Halteeinheiten mittels des Antriebs entlang dieser Zug-/Schubstange bewegt werden sollen. Die Antriebe der Halteeinheiten werden über die Steuereinrichtung der 4-Achsen-Werkzeugmaschine gesteuert.

Alternativ hierzu kann der Verschiebemechanismus derart ausgebildet sein, dass die Verschiebung der Halteeinheiten mittels der Bearbeitungseinrichtung erfolgt. Bei dieser Ausgestaltung ist weder eine Zug-/Schubstange noch ein Antrieb für eine Halteeinheit erforderlich, sondern die Positionierung der Halteeinheiten an der Führungseinheit wird von der mittels der Steuereinrichtung gesteuerten Bearbeitungseinrichtung übernommen. Auch diese Ausgestaltung dient der Schaffung einer sehr kostengünstigen Werkzeugmaschine, was insbesondere durch eine zusätzliche Kombination der Sägeeinrichtung mit der Bearbeitungseinrichtung gefördert werden kann, da in einer solchen Ausgestaltung lediglich ein Antrieb für alle Bewegungen der Komponenten der 4-Achsen-Werkzeugmaschine notwendig ist.

Es wird weiter vorgeschlagen, dass der Verschiebemechanismus derart eingerichtet ist, dass von mehreren eine Profilstange haltenden Halteeinheiten lediglich Eine verschoben wird, während die übrigen Halteeinheiten über die Profilstange mit verschoben werden. Dieses stellt eine einfach realisierbare Ausgestaltung des Verschiebemechanismus dar, da eine die Profilstange haltende Halteeinheit mittels der Bearbeitungseinrichtung, mittels eines Antriebs und einer ortsfesten Zug-/Schubstange oder mittels einer entlang ihrer Längserstreckung bewegbaren Zug-/Schubstange, an die die Halteeinheiten ankoppelbar sind, erfolgen kann.

Nach einer bevorzugten Ausgestaltung der Erfindung sind die Halteeinheiten mittels einer an der Bearbeitungseinrichtung angeordneten motorisierten Einstelleinheit einstellbar. Die Einstellung der Halteeinheiten betrifft die Einstellung des Abstandes der beiden Klemmbacken jeder Halteeinheit, zwischen denen die Profilstange eingeklemmt und somit gehalten wird. Bekannt ist es, diese Einstellung beispielsweise per Hand über einen Stellmechanismus, aufweisend eine Stellschraube und eine auf dieser bewegbaren Spindelmutter, zu realisieren. Eine solche Ausgestaltung steht aber einer Vollautomatisierung der Herstellung von Profilstangen entgegen. Mittels der motorisierten Einstelleinheit an der Bearbeitungseinrichtung, welche von der Steuereinrichtung der 4-Achsen-Werkzeugmaschine gesteuert wird, kann der Stellmechanismus eine Halteeinheit direkt beeinflusst werden, ohne dass zur Vollautomatisierung der Bearbeitung der Profilstangen jede Halteeinheit mit einer Antriebseinheit ausgestattet werden muss. Insofern stellt auch diese Ausgestaltung der Erfindung eine deutliche Kostenreduzierung bezüglich der Herstellung einer entsprechenden 4-Achsen-Werkzeugmaschine dar.

Ferner wird vorgeschlagen, dass die Steuereinrichtung eine CNC-Steuereinrichtung ist. Eine solche computerunterstützte, numerische Steuerung von Werkzeugmaschinen hat sich hinlänglich bewehrt und ermöglicht eine hoch präzise Bearbeitung von Profilstangen.

Weitere Vorteile und Merkmale der vorliegenden Erfindung werden im Folgenden anhand der in den Figuren gezeigten Ausführungsbeispielen näher erläutert. Es zeigen
- Fig. 1:: eine perspektivische Darstellung eines Ausführungsbeispiels für die erfindungs- gemäße 4-Achsen-Werkzeugmaschine,
- Fig. 2:: eine Seitenansicht eines Ausschnitts der in Figur 1 gezeigten 4-Achsen-Werkzeug- maschine,
- Fig. 3:: eine perspektivische Darstellung eines Ausführungsbeispiels für die Halteeinheit einer erfindungsgemäßen 4-Achsen- Werkzeugmaschine,
- Fig.4:: eine schematische Darstellung einer Ausführungsform für den beispielhaften Ablauf der Verschiebung mittels des erfin- dungsgemäßen Verschiebemechanismus, und
- Fig.5:: ein Ausführungsbeispiel für den erfindungsgemäßen Verschiebemechanis- mus.

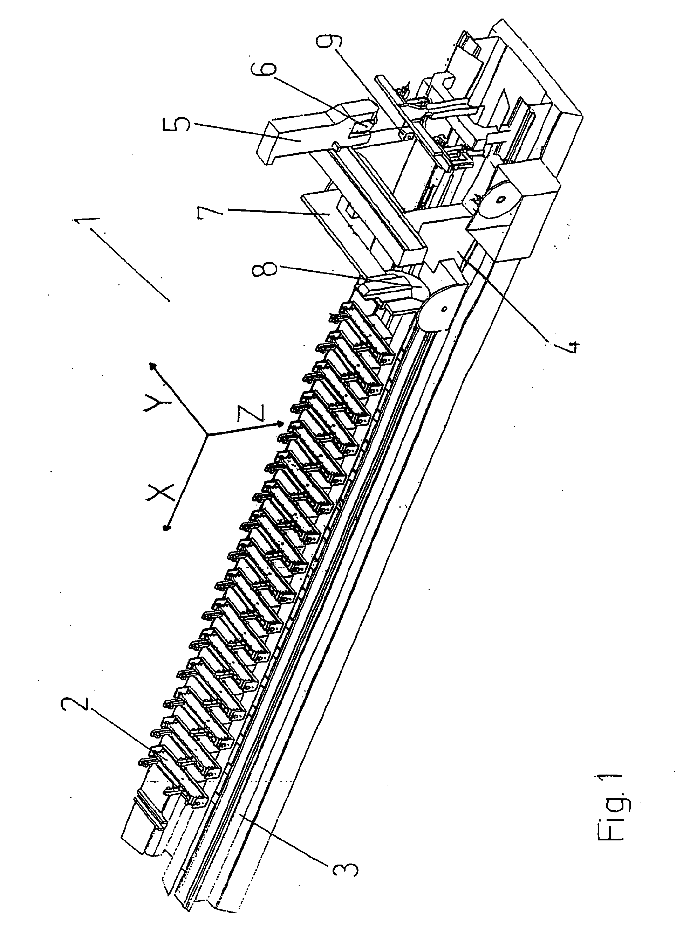

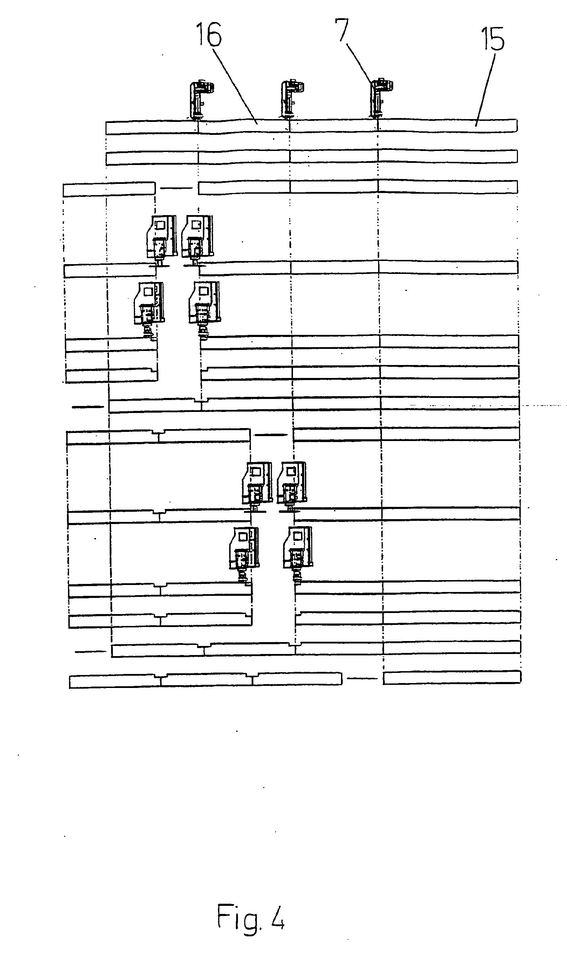

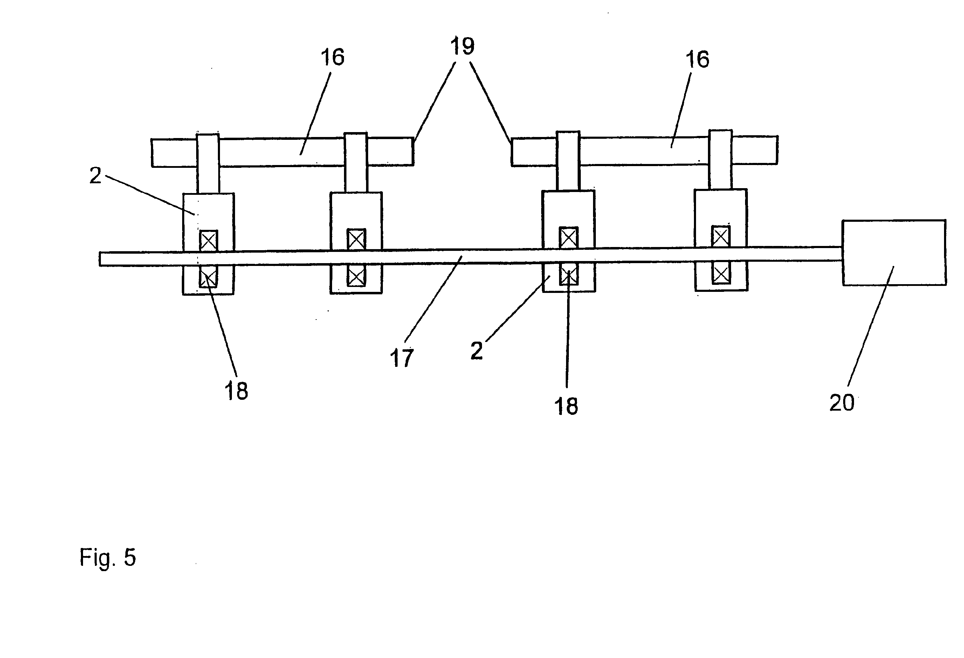

Figur 1 zeigt eine schematische Darstellung eines Ausführungsbeispiels für die erfindungsgemäße 4-Achsen-Werkzeugmaschine 1 zur Bearbeitung von Profilstangen 15. Die 4-Achsen-Werkzeugmaschine 1 umfasst eine Halteeinrichtung, die durch eine Mehrzahl von Halteeinheiten 2 und eine langgestreckt ausgebildete Führungseinheit 3 gebildet ist. Die Halteeinheiten 2 sind in unterschiedlichen Positionen an der Führungseinheit 3 anordbar. Die 4-Achsen-Werkzeugmaschine 1 umfasst weiter eine Bearbeitungseinrichtung 4 zum Bearbeiten der Profilstangen 15. Die Bearbeitungseinrichtung 4 ist entlang der Längserstreckung der Führungseinheit 3 (X-Achse) bewegbar. Zudem weist die Bearbeitungseinrichtung 4 eine an einem senkrecht (Y-, Z-Achse) zur Längserstreckung der Führungseinheit 3 (X-Achse) bewegbaren Führungsarm 5 angeordnete, motorisch angetriebene Bearbeitungseinheit 6 auf. Die Bearbeitungseinheit 6 ist um eine parallel zur Längserstreckung der Führungseinheit 3 (X-Achse) ausgerichtete Rotationsachse (A-Achse) verschwenkbar an der Bearbeitungsrichtung 4 angeordnet. Des Weiteren weist die 4-Achsen-Werkzeugmaschine 1 eine baulich von der Bearbeitungseinheit 6 getrennt an der Führungseinheit 3 angeordnete und entlang der Längserstreckung der Führungseinheit 3 (X-Achse) bewegbare Sägeeinrichtung 7 auf. Die Sägeeinrichtung 7 ist unabhängig von der Bearbeitungseinheit 6 ansteuerbar. Ferner weist die 4-Achsen-Werkzeugmaschine 1 einen Verschiebemechanismus auf, mit dem wenigstens eine Halteeinheit 2 entlang der Längserstreckung der Führungseinheit 3 (X-Achse) unabhängig von den übrigen Halteeinheiten 2 verschiebbar ist. Die Funktionsweise des Verschiebemechanismus wird näher anhand Figur 4 beschrieben. Figur 5 zeigt eine beispielhafte Ausführungsform für den erfindungsgemäßen Verschiebemechanismus.

Die Sägeeinrichtung 7 weist ein quer zur Längserstreckung der Führungseinheit 3 (X-Achse) angeordnetes Sägeblatt 8 auf, dass um eine senkrecht zur Längserstreckung der Führungseinheit 3 (X-Achse) und horizontal ausgerichtete Rotationsachse (B-Achse) verschwenkbar an der Sägeeinrichtung 7 angeordnet ist, wobei die Rotationsachse (B-Achse) parallel zur Y-Achse angeordnet ist. Das Sägeblatt 8 ist beim Sägen senkrecht (Y-Achse) zur Längserstreckung der Führungseinheit 3 (X-Achse) und horizontal bewegbar an der Sägeeinrichtung 7 angeordnet.

Die Halteeinheiten 2 sind mittels einer an der Bearbeitungseinrichtung 4 angeordneten motorisierten Einstelleinheit 9 einstellbar, welche beispielsweise durch einen CNC-Motor angetrieben wird.

Die 4-Achsen-Werkzeugmaschine 1 weist eine nicht gezeigte Steuereinrichtung vorzugsweise in Form einer CNC-Steuereinrichtung auf, welche zur Steuerung der verschiedenen Komponenten der 4-Achsen-Werkzeugmaschine 1 dient.

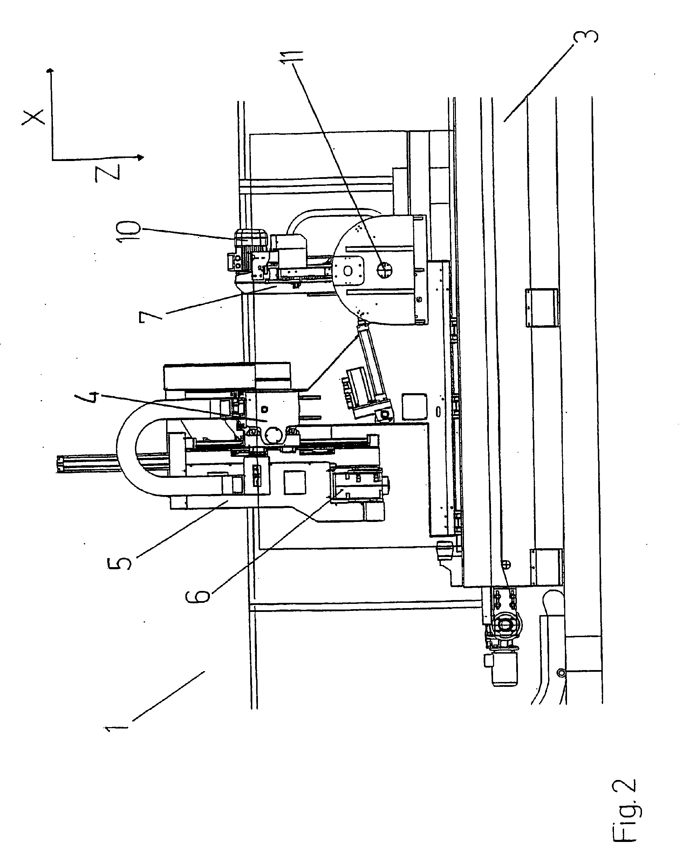

Figur 2 zeigt eine Seitenansicht eines Ausschnitts der in Figur 1 gezeigten 4-Achsen-Werkzeugmaschine 1. Es ist die an dem Führungsarm 5 um die A-Achse verschwenkbar angeordnete Bearbeitungseinheit 6 zu sehen, welche eine motorisch angetriebene Arbeitsspindel aufweist, an der verschiedene Bearbeitungswerkzeuge angeordnet werden können. Des Weiteren ist die Sägeeinrichtung 7 zu sehen, an der das Sägeblatt 8 angeordnet und mittels des Antriebs 10 angetrieben wird. Die Sägeeinrichtung 7 ist an der Bearbeitungseinrichtung 4 angeordnet und gemeinsam mit dieser entlang der Längserstreckung der Führungseinheit 3 (X-Achse) bewegbar. Das Sägeblatt 8 der Sägeeinrichtung 7 ist um die B-Achse verschwenkbar an der Sägeeinrichtung 7 angeordnet.

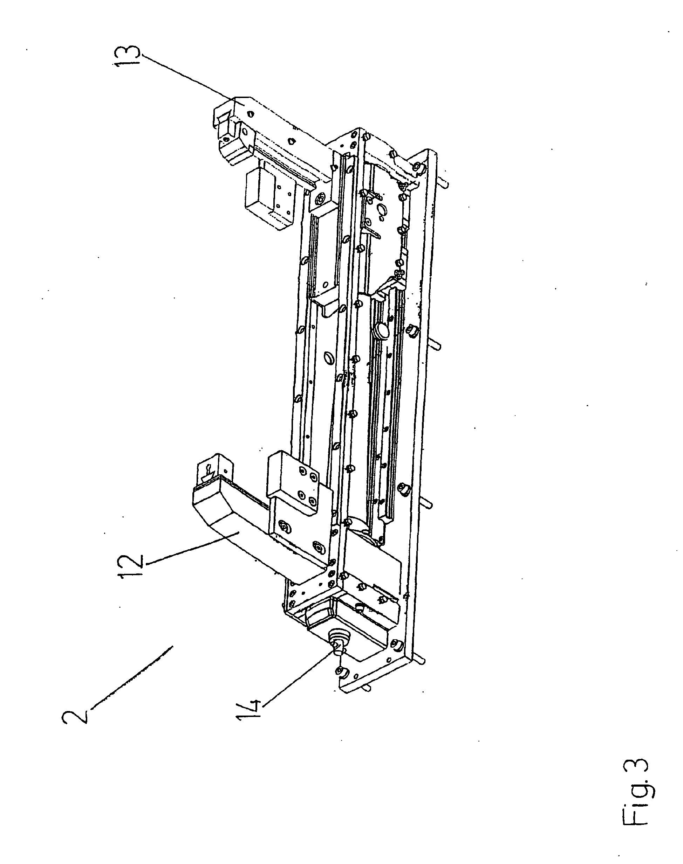

Figur 3 zeigt ein Ausführungsbeispiel für eine Halteeinheit 2, welche eine ortsfeste Klemmbacke 12 und eine relativ zu dieser bewegbare Klemmbacke 13 aufweist. Die Einstellung der Halteeinheit 2 beziehungsweise des Abstandes zwischen den Klemmbacken 12 und 13 erfolgt über einen Stellmechanismus, welche eine Stellschraube 14 aufweist, auf der eine mit der verschiebbaren Klemmbacke 13 verbundene, nicht dargestellte Spindelmutter geführt ist. Die Stellschraube 14 kann manuell, über einen eigenen Antrieb oder mittels der an der Bearbeitungseinrichtung 4 angeordneten Einstelleinheit 9 betätigt werden.

Figur 4 zeigt schematisch die Funktion des erfindungsgemäßen Verschiebemechanismus. In einem ersten Arbeitsschritt wird die Profilstange 15 mittels der Sägeeinrichtung 7 in Abschnitte 16 vorgegebener Länge abgelängt. In einem darauf folgenden Arbeitsschritt wird der linke Abschnitt 16 von den übrigen Abschnitten 16 der Profilstange 15 weg verschoben, um die einander zugewandten Enden der beiden linken Abschnitte 16 in darauf folgenden Arbeitsschritten, wie gezeigt, auf eine gewünschte Art und Weise bearbeiten zu können. Nach dieser Bearbeitung wird der verschobene linke Abschnitt 16 bis zu seiner stirnseitigen Anlage an die übrigen Abschnitte 16 zurück verschoben. Anschließend werden die beiden linken Abschnitte 16 der Profilstange 15 nach links verschoben, um die einander zugewandten Enden der mittleren Abschnitte 16 zur darauf folgenden Bearbeitung derselben zugänglich zu machen. Nach dieser Bearbeitung werden die beiden linken Abschnitte 16 wieder bis zu ihrer Anlage an den übrigen Abschnitten 16 der Profilstange 15 zurück verschoben. Danach werden die drei linken Abschnitte 16 nach links verschoben, um die einander zugewandten Enden zwischen den beiden rechten Abschnitten 16 zugänglich zu machen. Diese Arbeiten können abhängig von der vorhandenen Länge der Profilstange 15 und der gewünschten Anzahl an abgelängten Abschnitten 16 wiederholt werden.

Figur 5 zeigt ein Ausführungsbeispiel für den erfindungsgemäßen Verschiebemechanismus. Der Verschiebemechanismus weist eine parallel zur Längserstreckung der Führungseinheit 3 (X-Achse) angeordnete Zug-/Schubstange 17 auf, an die die Halteeinheiten 2 ankoppelbar sind. Die Ankopplung der Halteeinheiten 2 an die Zug-/Schubstange 17 erfolgt über steuerbare Klemmen 18. In dem gezeigten Ausführungsbeispiel wird ein abgelängter Abschnitt 16 einer Profilstange 15 von jeweils zwei Halteeinheiten 2 gehalten. Zur Bearbeitung der einander zugewandten Enden 19 der Abschnitte 16 wird der rechte Abschnitt 16 nach rechts verschoben. Hierzu werden vorab die Klemmen 18 der beiden links dargestellten Halteeinheiten 2 gelöst, während die Klemmen 18 der rechts dargestellten Halteeinheiten 2 betätigt sind und somit die beiden rechten Halteeinheiten 2 an die Zug-/Schubstange 17 ankoppeln. Wird diese Zug-/Schubstange 17 nach rechts bewegt, wird der rechte Abschnitt 16 von dem linken Abschnitt 16 zur Zugänglichmachung der einander zugewandten Enden 19 weg bewegt. Dieses kann beispielsweise über einen pneumatischen Zylinder 20 geschehen. Alternativ kann auch lediglich die rechte Klemme 18 der rechten Halteeinheit 2 betätigt werden, während die übrigen Klemmen 18 gelöst sind. Auch hierdurch lässt sich der rechte Abschnitt 16 in die gezeigte Position verschieben.

Die anhand der Figuren gezeigten Ausführungsbeispiele dienen der Erläuterung und sind nicht beschränkend.

## Patentansprüche

1. 4-Achsen-Werkzeugmaschine (1) zur Bearbeitung von Profilstangen (15), insbesondere von Aluminiumprofilstangen, umfassend eine Halteeinrichtung zum Halten der Profilstangen (15), eine Bearbeitungseinrichtung (4) zum Bearbeiten der Profilstangen (15) sowie eine Steuereinrichtung zum Steuern der Werkzeugmaschine (1), wobei die Halteeinrichtung eine Mehrzahl von Halteeinheiten (2) und die Bearbeitungseinrichtung (4) eine an einem senkrecht zur Längserstreckung (X-Achse) der Profilstangen (15) in der Y- und Z-Achse bewegbaren Führungsarm (5) angeordnete, motorisch angetriebene Bearbeitungseinheit (6) aufweist, die um eine parallel zur Längserstreckung der Profilstangen (15) (X-Achse) ausgerichtete Rotationsachse (A-Achse) verschwenkbar an der Bearbeitungseinrichtung (4) angeordnet ist, und wobei eine baulich von der Bearbeitungseinheit (6) getrennt angeordnete Sägeeinrichtung (7) vorgesehen ist, die unabhängig von der Bearbeitungseinheit (6) ansteuerbar ist, **gekennzeichnet durch** eine langgestreckt ausgebildete Führungseinheit (3), entlang der die Bearbeitungseinrichtung (4) und die Sägeeinrichtung (7) verschiebbar sind und an der die Halteeinheiten (2) an unterschiedlichen Positionen anord bar sind, wobei wenigstens eine Halteeinheit (2) **durch** einen Verschiebemechanismus entlang der Längserstreckung der Führungseinheit (3) unabhängig von den übrigen Halteeinheiten (2) verschiebbar ist.

2. 4-Achsen-Werkzeugmaschine (1) nach Anspruch 1, **dadurch gekennzeichnet, dass** die Sägeeinrichtung (7) an der Bearbeitungseinrichtung (4) angeordnet ist und gemeinsam mit dieser entlang der Längserstreckung der Führungseinheit (3) (X-Achse) bewegbar ist.

3. 4-Achsen-Werkzeugmaschine (1) nach Anspruch 1, **dadurch gekennzeichnet, dass** die Sägeeinrichtung (7) unabhängig von der Bearbeitungseinrichtung (4) entlang der Längserstreckung der Führungseinheit (3) (X-Achse) bewegbar ist.

4. 4-Achsen-Werkzeugmaschine (1) nach einem der vorhergehenden Ansprüche, **dadurch gekennzeichnet, dass** die Sägeeinrichtung (7) ein quer zur Längserstreckung der Führungseinheit (3) (X-Achse) angeordnetes Sägeblatt (8) aufweist, das um eine senkrecht zur Längserstreckung der Führungseinheit (3) (X-Achse) und horizontal ausgerichtete Rotationsachse (11) (B-Achse) verschwenkbar an der Sägeeinrichtung (7) angeordnet ist, wobei das Sägeblatt (8) beim Sägen senkrecht zur Längserstreckung der Führungseinheit (3) (X-Achse) und horizontal bewegbar (Y-Achse) an der Sägeeinrichtung (7) angeordnet ist.

5. 4-Achsen-Werkzeugmaschine (1) nach einem der vorhergehenden Ansprüche, **dadurch gekennzeichnet, dass** der Verschiebemechanismus eine parallel zur Längserstreckung der Führungseinheit (3) (X-Achse) angeordnete Zug-/Schubstange (17) aufweist, an die die Halteeinheiten (2) ankoppelbar sind.

6. 4-Achsen-Werkzeugmaschine (1) nach einem der vorhergehenden Ansprüche, **dadurch gekennzeichnet, dass** wenigstens eine Halteeinheit (2) einen Antrieb aufweist.

7. 4-Achsen-Werkzeugmaschine (1) nach einem der Ansprüche 1 bis) 4, **dadurch gekennzeichnet, dass** der Verschiebemechanismus derart ausgebildet ist, dass die Verschiebung der Halteeinheiten (2) mittels der Bearbeitungseinrichtung (4) erfolgt.

8. 4-Achsen-Werkzeugmaschine (1) nach einem der vorhergehenden Ansprüche, **dadurch gekennzeichnet, dass** der Verschiebemechanismus derart eingerichtet ist, dass von mehreren eine Profilstange (15) haltenden Halteeinheiten (2) lediglich eine verschoben wird, während die übrigen Halteeinheiten (2) über die Profilstange (15) mitverschoben werden.

9. 4-Achsen-Werkzeugmaschine (1) nach einem der vorhergehenden Ansprüche, **dadurch gekennzeichnet, dass** die Halteeinheiten (2) mittels einer an der Bearbeitungseinrichtung (4) angeordneten motorisierten Einstelleinheit (9) einstellbar sind.

10. 4-Achsen-Werkzeugmaschine (1) nach Anspruch 9, **dadurch gekennzeichnet, dass** die Einstellung der Halteeinheit (2) die Einstellung des Abstandes der beiden Klemmbacken (12, 13) der Halteeinheit (2) zueinander umfasst.

11. 4-Achsen-Werkzeugmaschine (1) nach einem der vorhergehenden Ansprüche, **dadurch gekennzeichnet, dass** die Steuereinrichtung eine CNC-Steuereinrichtung ist.

## Claims

1. A four-axis machine tool (1) for processing shaped bars (15), in particular aluminium shaped bars, including a holding device for holding the shaped bars (15), a processing device (4) for processing the shaped bars (15) and a control device for controlling the machine tool (1), wherein the holding device has a plurality of holding units (2) and the processing device (4) has a motor-driven processing unit (6) which is arranged on a guide arm (5) movable perpendicularly to the longitudinal extent (X-axis) of the shaped bars (15) on the Y- and Z-axis and which is arranged on the processing device (4) pivotably about an axis of rotation (A-axis) oriented parallel to the longitudinal extent of the shaped bars (15) (X-axis), and wherein there is provided a sawing device (7) which is arranged structurally separately from the processing unit (6) and which is actuable independently of the processing unit (6), **characterised by** a guide unit (3) which is of an elongate configuration and along which the processing device (4) and the sawing device (7) are displaceable and on which the holding units (2) can be arranged at different positions, wherein at least one holding unit (2) is displaceable by a displacement mechanism along the longitudinal extent of the guide unit (3) independently of the other holding units (2).

2. A four-axis machine tool (1) according to claim 1 **characterised in that** the sawing device (7) is arranged at the processing device (4) and is movable jointly therewith along the longitudinal extent of the guide unit (3) (X-axis).

3. A four-axis machine tool (1) according to claim 1 **characterised in that** the sawing device (7) is movable independently of the processing device (4) along the longitudinal extent of the guide unit (3) (X-axis).

4. A four-axis machine tool (1) according to one of the preceding claims **characterised in that** the sawing device (7) has a saw blade (8) which is arranged transversely relative to the longitudinal extent of the guide unit (3) (X-axis) and which is arranged at the sawing device (7) pivotably about an axis of rotation (11) (B-axis) which is oriented perpendicularly relative to the longitudinal extent of the guide unit (3) (X-axis) and horizontally, wherein in the sawing operation the saw blade (8) is arranged at the sawing device (7) movably horizontally (Y-axis) and perpendicularly to the longitudinal extent of the guide unit (3) (X-axis).

5. A four-axis machine tool (1) according to one of the preceding claims **characterised in that** the displacement mechanism has a pull/push bar (17) which is arranged parallel to the longitudinal extent of the guide unit (3) (X-axis) and to which the holding units (2) can be coupled.

6. A four-axis machine tool (1) according to one of the preceding claims **characterised in that** at least one holding unit (2) has a drive.

7. A four-axis machine tool (1) according to one of claims 1 to 4 **characterised in that** the displacement mechanism is so adapted that the displacement of the holding units (2) is effected by means of the processing device (4).

8. A four-axis machine tool (1) according to one of the preceding claims **characterised in that** the displacement mechanism is so adapted that of a plurality of holding units (2) holding a shaped bar (15) only one is displaced while the other holding units (2) are also displaced over the shaped bar (15).

9. A four-axis machine tool (1) according to one of the preceding claims **characterised in that** the holding units (2) are adjustable by means of a motorised adjusting unit (9) arranged at the processing device (4).

10. A four-axis machine tool (1) according to claim 9 **characterised in that** adjustment of the holding unit (2) includes adjustment of the spacing of the two clamping jaws (12, 13) of the holding unit (2) relative to each other.

11. A four-axis machine tool (1) according to one of the preceding claims **characterised in that** the control device is a CNC control device.

## Revendications

1. Machine-outil à 4 axes (1) permettant le traitement de tiges profilées (15), en particulier des tiges profilées en aluminium, comportant un dispositif de retenue destiné à maintenir les tiges profilées (15), un dispositif de traitement (4) pour le traitement des tiges profilées (15), ainsi qu'un dispositif de commande pour la commande de ladite machine-outil (1), ledit dispositif de retenue comportant une pluralité d'unités de retenue (2) et ledit dispositif de traitement (4) comportant une unité de traitement (6), qui est actionnée par un moteur et est disposée sur un bras de guidage (5) mobile (dans l'axe Y et l'axe Z) perpendiculairement à la dimension longitudinale (axe X) des tiges profilées (15) et qui est montée sur le dispositif de traitement (4) de manière pivotante autour d'un axe de rotation (axe A) orienté parallèlement à la dimension longitudinale des tiges profilées (15) (axe X), et il est prévu un dispositif de sciage (7), qui est disposé séparément de l'unité de traitement (6) sur le plan de la construction et qui peut être actionné indépendamment de l'unité de traitement (6), **caractérisée par** une unité de guidage (3) réalisée dans le sens longitudinal, le long de laquelle peuvent se déplacer le dispositif de traitement (4) et le dispositif de sciage (7) et sur laquelle les unités de retenue (2) peuvent être agencées dans différentes positions, au moins une unité de retenue (2) étant apte à se déplacer au moyen d'un mécanisme de déplacement le long de la dimension longitudinale de l'unité de guidage (3), indépendamment des autres unités de retenue (2).

2. Machine-outil à 4 axes (1) selon la revendication 1, **caractérisée en ce que** le dispositif de sciage (7) est disposé sur le dispositif de traitement (4) et est apte à être déplacé conjointement avec ce dernier le long de la dimension longitudinale de l'unité de guidage (3) (axe X).

3. Machine-outil à 4 axes (1) selon la revendication 1, **caractérisée en ce que** le dispositif de sciage (7) est apte à être déplacé indépendamment du dispositif de traitement (4) le long de la dimension longitudinale de l'unité de guidage (3) (axe X).

4. Machine-outil à 4 axes (1) selon l'une quelconque des revendications précédentes, **caractérisée en ce que** le dispositif de sciage (7) comporte une lame de scie (8), qui est agencée transversalement à la dimension longitudinale de l'unité de guidage (3) (axe X) et qui est montée sur le dispositif de sciage (7) de manière pivotante autour d'un axe de rotation (11) (axe B) orienté perpendiculairement à la dimension longitudinale de l'unité de guidage (3) (axe X) et horizontalement, ladite lame de scie (8) étant montée sur le dispositif de sciage (7) de manière mobile (axe Y) pendant le sciage perpendiculairement à la dimension longitudinale de l'unité de guidage (3) (axe X) et horizontalement.

5. Machine-outil à 4 axes (1) selon la revendication 1, **caractérisée en ce que** le mécanisme de déplacement comporte une tige de traction/poussée (17), qui est disposée parallèlement à la dimension longitudinale de l'unité de guidage (3) (axe X) et à laquelle peuvent être attachées les unités de retenue (2).

6. Machine-outil à 4 axes (1) selon l'une quelconque des revendications précédentes, **caractérisée en ce qu'**au moins une unité de retenue (2) comporte un système d'entraînement.

7. Machine-outil à 4 axes (1) selon l'une quelconque des revendications 1 à 4, **caractérisée en ce que** le mécanisme de déplacement est configuré de telle sorte que le déplacement des unités de retenue (2) s'effectue au moyen du dispositif de traitement (4).

8. Machine-outil à 4 axes (1) selon l'une quelconque des revendications précédentes, **caractérisée en ce que** le mécanisme de déplacement est configuré de telle sorte que parmi plusieurs unités de retenue (2) maintenant une tige profilée (15), une seule est déplacée, alors que les autres unités de retenue (2) sont entraînées conjointement au-dessus de la tige profilée (15).

9. Machine-outil à 4 axes (1) selon l'une quelconque des revendications précédentes, **caractérisée en ce que** les unités de retenue (2) peuvent être réglées au moyen d'une unité de réglage (9) motorisée, disposée sur le dispositif de traitement (4).

10. Machine-outil à 4 axes (1) selon la revendication 9, **caractérisée en ce que** le réglage de l'unité de retenue (2) englobe le réglage de la distance entre les deux mâchoires de serrage (12, 13) de l'unité de retenue (2).

11. Machine-outil à 4 axes (1) selon l'une quelconque des revendications précédentes, **caractérisée en ce que** le dispositif de commande est un dispositif de commande CNC.
